# EUROPEAN PATENT APPLICATION

(11) **EP 1 970 563 A1**
(43) Date of publication of application: **17.09.2008**
(21) Application number: 06841718.7
(22) Date of filing: 29.11.2006
(51) Int. Cl.: F03G 3/00, F03G 7/10

(54) **SYSTEM FOR HARNESSING THE FORCE OF GRAVITY**

(30) Priority: 03.01.2006 ES 200600014
(71) Applicant: Reyes Florido, Juan, 21291 La Nava Huelva (ES)
(72) Inventor: Reyes Florido, Juan, 21291 La Nava Huelva (ES)
(74) Representative: Gil-Vega, Victor
(86) International application number: PCT/ES2006/000666
(87) International publication number: WO 2007/077272

(57) **Abstract**

The invention relates to a system for harnessing the force of gravity. The purpose of the present invention refers to the combined or separate production of energy and/or the pumping of fluid or gases, using a system including a support point on which a long surface can pivot by mean of hinges or bolts. The aforementioned surface is **characterized in that** it comprises surfaces which are joined at each end by means of hinges such that they can move vertically, the vertical position thereof being maintained under the action of the force exerted by one or more weights which can be moved from one surface to the other and vice versa by means of mechanisms using motors of any type. In this way, when one end surface is lowered, the other surface is raised, thereby actuating the pistons which move inside cylinders which are joined by rods to the end surfaces and which can generate a pneumatic or hydraulic pressure system.

## Description

### OBJECT AND BACKGROUND OF THE INVENTION

The present invention is set in the sector of the technique referred to the production of energy and/or the pumping of gases or fluids through the pressures obtained by one or more sliding weights that can act on a swivel element, taking advantage of the movement of that element in order to act on one or more hydraulic or pneumatic cylinders based on The Principle of Leverage.

It is not necessary to know much about energy to know that we are about to destroy the planet, due to the use of the industry that generates the energy we need.

Some countries are considering that the new power stations were the nuclear ones, when, actually, the danger that cause such stations make us think that it should be better to finish with all related to the nuclear materials, specially in war time, so that it is necessary the resignation, by all the countries of the world, to the possession, production and use of nuclear material.

The effects of thermal energy on the earth's atmosphere are also well known, as well as the costs for the extraction of raw material necessary for obtaining such energy. We are of the opinion that the tidal energy need very expensive infrastructures and there is always the risk of the sea unforeseen circumstances.

The wind energy, apart from depending on the wind, it is insufficient, and in some cases it can affect the environment. We think that biomass could have a better use if it were used to make compost for farm crops and thus improve the ground affected by the chemical fertilizers.

We think that geothermal energy needs time to be developed so that it can generate enough amount of energy. We also think that the solar energy developes in a very positive way, but at the moment it is not enough. In most cases the hydraulic energy depends on dams that are not always full, apart from being an insufficient production for the present demand, due to the lack of rain that can create a high risk of drought, so that it is more and more necessary to develop systems to desalinate sea water on a large scale and to be able to pump it to its destiny and make it to not depend on the electrical energy for their operation.

There are some apparatus and systems based on the Principle of Leverage, designed to get the most out of a swivel element that rests on a support point, like the seesaw, used from the ancient world.

A balance is an apparatus that destabilizes a swivel element through weights. Some apparatus use the movement obtained for an alternative distribution of weights like the movement described in GB 212574 A, that consists of a system integrated by a long and swivel element in its central point on a support set at a certain height, in which a weight with rounded form, moved by the long element arm between its end and the centre of the long element, in such a way that it destabilizes it, being predicted that the movement generated can be used , without mentioning what type of force moves the weight. There are apparatus used in tidal energies that take advantage of the pressures of a cylinder to move a turbine, the document WO 0036300 A1 describes a system integrated by a long and swivel element by its central point on a set support to a certain height that includes points in the end of the long element destined alternatively to receive the action of a force produced by a series of wires driven by a motor and acting every element of the long arm on a hydraulic cylinders that can act on a turbine-generator. Considering there is no possibility nor an obvious result, given the characteristic of the elements of the invention, that the force could be produced by sliding weights, such as the ones exposed in GB212574, given that it is not considered any way of holding and moving sliding weights on the structure. Moreover, the weights would also act on a sloping surface with the difficulties and risks that it would involve.

There are manual water pumps that using first and second kind levers move the piston of a cylinder. All of them take advantage of a swivel element based on a well-known principles of the Principle of Leverage, but they are different from the present invention, in the way and methods of applying the force or power to create the movement of the swivel element, in the structure and elements that compose the whole of the system, and in the benefits obtained from the swivel element, characteristic of the present invention, that won't be obtained without the exercise of the inventive activity.

There are several methods to maintain a platform in a horizontal position while it is vertically displaced. Such methods are used in cranes, folding shop cranes, freight elevators and elevators, through guides that can be tracks, rails, flexible tubes used as guides, bolts, hinges with stop and special fittings in general. In the present invention, side platforms act like freight elevators or elevator platforms, but, instead of being driven by the hydraulic cylinders to get its ascending or descendent movement, the platforms themselves, with their own weight, act over the hydraulic cylinders to create pressures, reason why it is understood that we will manage to keep the side platforms that characterize the present invention in a horizontal position while it is vertically displaced by using any of the proper known methods.

### DESCRIPTION OF THE INVENTION

The present system for the use of gravity force, which is specially made to produce, in a combined or a separate way, electrical energy and pumping of suction/ expulsion of fluids and gases, and integrating a long and swivel element through its central point on a support set at a certain height, it is characterized in that the above long and swivel element rounds off in both platforms, joined to the long element with a hinge form, in such a way that these platforms can be permanently in a horizontal situation, at the same time as they are sliding vertically by the swivelling element of the central element with respect to the fulcrum being such platforms made to receive alternatively a weight, so that it is necessary that the platforms keep its position horizontally while they are vertically displaced.

The invention as a whole is characterized because it is designed and it acts as an articulated lever and for that end it has side platforms that maintain its horizontal position while they are vertically displaced. Its main advantage is the ability to use sliding weights, moved in any conventional way, and to assure the stability of these weights while they are applying force to the platform, given that these weights stay in horizontal position during its vertical displacement avoiding the inclined force to which the weights would undergo if they were acting on a sloping surface, with the risk it would involve that the weights of great tonnage act as power to move the cylinders on sloping surfaces.

One of the advantages it has is the ability to change the exerted force on the cylinders according to the place where the weights are situated over the side platforms with respect to the situation of the cylinders that act as staying powers according to the Principle of Leverage.

Another advantage is that, the displacement of weights along the side platforms while reaching its point of action is performed over a horizontal surface without having to overcome the force that it would involve that displacement over a sloping surface.

Another benefit is that, for the manipulation during the different types of maintenance works or possible failure of the vehicles that carry the weights of great tonnage, being platforms in horizontal position, it would make easy the job for workers.

One more advantage of the present invention is that, when using it as suction/ expulsion fluid and gases pump, it doesn't need of the electrical energy for its operation, because the weights can be moved by vehicles that work with combustion motors, so that the system could be used in places with lack of electrical energy supply.

### DESCRIPTION OF THE DRAWINGS

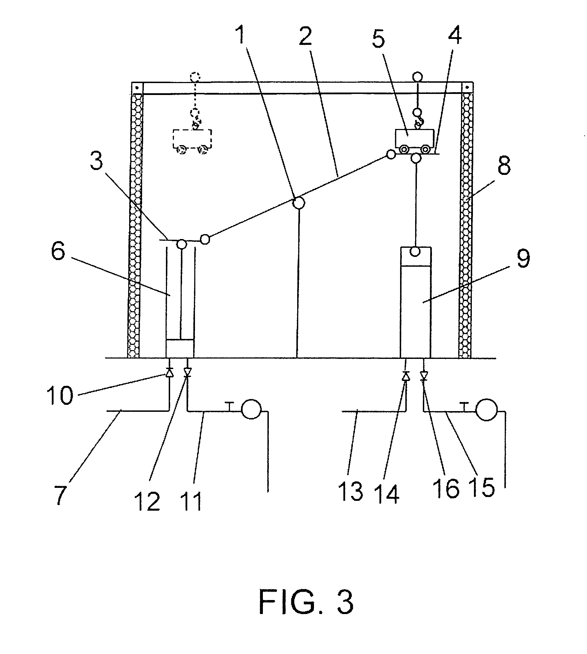

For a brief explanation of the system, we have figure 1 that depicts a view of the system to work in closed circuit producing energy only. Figure 2 depicts a system that operates in closed circuit with safety and pressure valves. Figure 3 shows a system that operates in open circuit producing pumping by fluid suction/expulsion and at the same time producing electrical energy by turbines.

### DETAILED DESCRIPTION OF THE INVENTION

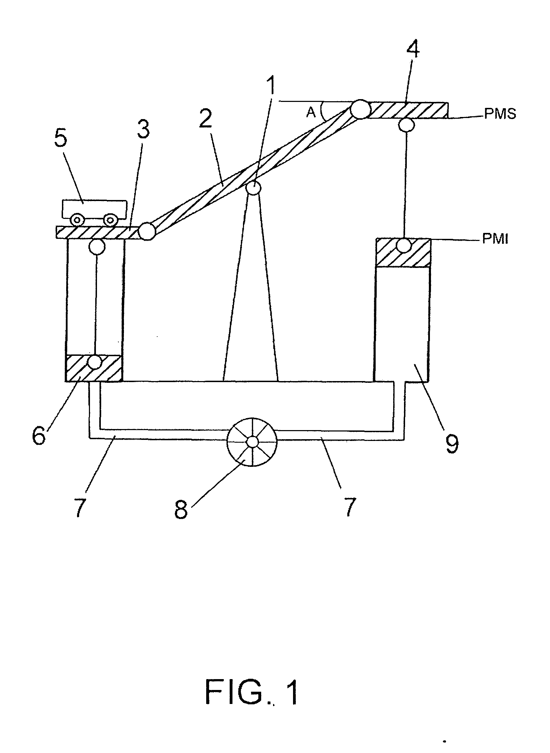

The system for the use of gravity force that we explain next using figure 1 as a non restrictive example, consists of a fulcrum (1) lifted to a certain height on which a long element (2) rests its gravitational centre by hinges, bolts or other methods so that the element 2 could pivot with respect to the fulcrum when driving an alternative force on each of its sides which will be called arms.

The aforementioned element (2) is characterized in that it comprises two platforms (3) (4), attached to each arm of element (2), so that it can be maintained the horizontal position of both during the swivel movement with respect to each arm of element (2), so that the platform could keep the horizontal position during the swivel movement of the central element. As the platforms (3) and (4) can remain in horizontal position, we will be able to improve the stability of any object that stay on them and particularly the sliding weight stability, as well as being able to make easier the access to any element to the mentioned platforms through the elevators, ramps, stairs or similar that would rest on the flat.

In order to make the element (2) be able to do the swivel movement with respect to the fulcrum (1) a force it is needed, for which the system is characterized by one or more weights (5) that can be displaced using motors of any kind, so that the motors can move a vehicle with wheels which displaces the weight to a system of cranes, conveying belts or to any other apparatus that using one or more motors of any kind, can displace the weight in an alternative way from the platform (3) to the platform (4) and vice versa, so that one of the platforms reaches the lower point of vertical displacement that will be called lower dead centre (PMI) due to the force applied by the movable weight on the platform. Then, the mentioned weight would displace to the other platform, which in that moment it would be in its higher vertical movement point that will be called upper dead centre (PMS) applying in that moment the force produced by its own weight on the platform.

Once the sliding weight applies the force produced by its weight on the platform situated in the (PMS) it will begin to descend. For that end the system has the proper valves to allow the beginning of the vertical movement in a certain moment allowing the fluid to flow. The platform will transmit the force by a rod on the piston which will begin to descend sliding inside the hydraulic or pneumatic cylinder (6) that will be full of a liquid or gas. The descent will be due to the vertical descendant movement produced by the sliding weigh that is acting on the mentioned platform, and it will make the fluid or gas in cylinder (6) to pass through a tube (7) to a turbine generator (8) and from this point to the other cylinder with piston (9) which will begin its ascending at a speed that will be mainly determined by the resistance the fluid or gas has to overcome in its running and at a time it will make go up the appropriate platform for that piston by rods or other similar systems, so when the platform in which the weight is acting reaches its (PMI), the other one reaches its (PMS) repeating the cycle of the weight displacement from the (PMI) to the (PMS) in each platform. The force is transmitted by the action of the central element (2) resting on the fulcrum (1) from a platform to the other and determined by the resistance which the fluid or gas has to overcome.

The differences of heights between the lower and upper dead centre of the side platform will be called stroke and they will be the same that the distance between the (PMI) and the (PMS) of the cylinders, which will be determined by height of the support point and the angle of the slope A which will be determined at the same time by the length of the central element arm so that it can adjust with higher or lower inclination to the cylinders heights.

The cylinders, pistons and tubes will have proper diameter to obtain the best performance of the system, being possible the hydraulic or pneumatic cylinder be of non circular base, it means that they could have quadrangular, hexagonal or any other geometrical form.
The turbine-generator could have a system that always allows it to function in the same direction, regardless of the place the pressure goes in. The materials for the building of the different elements will be the most appropriate ones for the different sizes and shapes the present invention could be made. The system could stay fixed to the flat, be movable, it means, it will have wheels for its displacement, or on a floating structure.

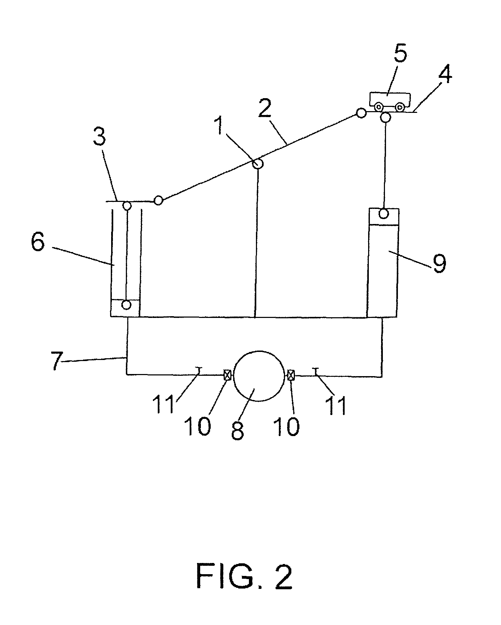

In order to make a detailed explanation of at least one way of performance of the present invention we'll look at figure 2. In that figure it is depicted, in a non restrictive example, the building of a small system for the use of the gravity force in closed circuit, and it consist of a fulcrum (1) fixed to the flat and at the appropriate height and on where a long metallic element 2 of 200 meters length by 20 meters width can swivel. At the end of the arms of the long surface, two metallic platforms 3 and 4, of 20 meters length by 20 meters width are connected through bolts and they can swivel at the same time with respect to the element (2) so that it can stay in its horizontal position during the vertical movement. The surfaces of these three elements are characterized because they allow the displacement of the sliding weight (5) over them through wheels, wire drives, conveyor belts, or the weight could be also lifted from the (PMI) to the (PMS) of each side platform without using the central element through elevators or cranes. In this example the weight will be displaced by a vehicle with a set of wheels, attached to electric motors, powered by a generator motor and aided by wire drives, displacing a total weight of one thousand tons and 180 seconds time to displace the weight from a platform to the other.

The hydraulic cylinders (6) and (9) with quadrangular plants will have 20 meters of stroke and 1 square meter of plant surface, and so we would obtain an approximate volume of 20 cubic meters a cylinder, so using the proper fluid or gas to fill a cylinder and the tube that join it to the other one in a closed circuit, we will obtain an approximate pressure of 100 kg/cm . Without taking into account the frictions and lost of pressure, this pressure will be conveyed through the liquid or the gas which circulates through the tube (7) that has safety valves (11) to stop the movement of all the system if it were necessary, and/or regulate the displacement speed of fluid or gas, as well as determining the movement in which the descent of the side platform will start and it will correspond preferably with the moment when the weight will be installed on the platform and not before, as well as the automatic valves (10) to regulate the incoming pressure to the turbine generator (8) inserted in the tube (7) that communicate the cylinders. This turbine will have an appropriate pulley or gear system to gear up or gear down the revolutions so that they can move the generator at a proper speed.

The fluid will leave the turbine at the exit pressure that remains after having moved the turbine that moves the generator. This exit pressure must be at least enough to allow the cylinders piston (9) to displace to its (PMS) that will push the platform that is connected to the piston. In practice the force is conveyed from a platform to the other through the central element that swivel on the support point and determined by the resistance that the fluid or gas will have to overcome.

The tubes that communicate the cylinders will be of the necessary diameter for the correct operation of the system.

The connecting rods that link the pistons to the side surfaces, have bolts that allow it to swivel in order to absorb the slightly circular, circumference arc shaped movement that describe the surfaces which are at the end of the element (2), maintaining the horizontality of both. The turbine generator system can have an auxiliary motor that keeps the movement during the long the weight takes to go from the platform in (PMI) to the platform in (PMS).

Besides the energy production by closed circuit as the one described in the example, it will be explained another method of invention performance in which the system for the use of gravity force, according to figure (3) it is characterized because it can be used for pumping by suction and expulsion of liquids or gases in open circuit setting for that end the pressure regulating valves, the necessary one way valves and the tubes for each cylinder, so that when the piston is displaced in one way, makes the cylinder sucks the liquid or gas, and when it is displaced in the opposite direction, eject the liquid or gas and so the system can be used as pump to desalinate water or suction/expulsion of any liquid or gas and to product energy taking advantage of the pressure to which the fluid is subjected when it is ejected, providing the system with the proper turbine-generators.

For a more detailed explanation we'll look at figure (3), that shows a system for the use of gravity force used to pump sea water and carry it to a tank lifted at 600 meters in order to process it and use the height to which the above tank is, for a possible water treatment to desalinate it by inverse osmosis as well as the use of that feature to move a turbine-generator by the pressure generated in the expulsion tubes of each cylinder, produced by the movement of the pistons that will be moved by the side platform by the action of the weight, through connecting rods or similar.

The system has a fulcrum at the proper height where a long element (2) pivots, linked at its ends to the platforms (3) and (4) with bolts. The weight (5) that is one thousand tons is moved by a big crane (8) that lifts the weight and carries it from one of the side platforms that is in (PMI) to the other platform that is in (PMS), so when it reaches the (PMI) it is carried to the platform in (PMS), and so on. The crane can also have two folding shop cranes each, with its own weight, in order to act in an independent way in each platform without having to displace the weight from one platform to the other, so that when the weight reaches the (PMI) on the corresponding platform, the crane will lift it to put it on the same platform once it reaches the (PMS).

The cylinders (6) and (9) have a height of 20 meters, so that when the weight acts on the platform that is in (PMS), the piston will eject the water through the expulsion tube (11) that is in the cylinder (6), and that has already been filled by suction produced by the vacuum made by the piston through the suction tube (7) that has a one way valve (10), and at a expulsion pressure of 100 kg/ cm² for instance, without taking into account the frictions and lost of pressure. When the piston ejects the water through the expulsion tube (11) that will have a one way valve (12), the liquid will move a turbine-generator that operates at a pressure of 40 kg/ cm², the output pressure of the water after leaving the turbine will maintain a pressure of 60 kg/ cm², in theory, without taking into account the frictions and lost of pressure. And finally it will reach the tank lifted at 600 meters over the level of the sea.

The hydraulic cylinder piston (9) had already been displaced from (PMI) to (PMS) suctioning the water through the suction tube (13) with a one way valve (14) at a certain pressure by the vacuum produced by the piston, making the water flow into the cylinder. Once the piston reaches the (PMS), the side platform will be also in the (PMS). The weight will be moved by the crane to the side platform that acts on the piston in this cylinder, and it will start its descent making the water go out the cylinder, that has already been suctioned, by the expulsion tube (15) with one way valve 16, at a pressure of 100 kg/cm² driving another turbine that needs a pressure of 40 kg/cm² to work. The water will continue its path at an output pressure of 60 kg/cm² without taking into account the frictions and lost of pressure to the above tank located at 600 meters over the level of the sea.

The calculations in the example has been performed in an approximate way without taking into account neither the frictions nor the lost of pressure. For an industrial application we must take into account all these values in order to properly adjust the operation characteristics of the turbine-generator, the pressure regulating valves, diameters and characteristics of the tubes.

## Claims

1. System for harnessing the force of gravity, being specially made to produce, in a combined or separate way, energy and/or suction and expulsion of fluids or gases, and integrating a long and swivel element at its middle point over a support point located at a certain height. It is **characterized in that** the long element (2) finishes at both ends in two platforms (3) (4), linked in a hinge-like form. Such platforms can permanently keep an horizontal position and they are also vertically displaced by the swivel movement of the central element (2) with respect to the support point (1) being such platforms (3) and (4) used to receive alternatively a weight (5) and acting on an hydraulic or pneumatic cylinder (6) (9), that act over a turbine generator.

2. System for harnessing the force of gravity, according to 1st, **characterized in that** when it is used for fluid pumping, the hydraulic or pneumatic cylinders act on independent circuits equipped with one or more turbine-generators

3. System for harnessing the force of gravity according to the above claims, **characterized in that** the weight (5) acting alternatively on the two platforms (3) (4) is on a movable support, that is displaced by any proper conventional method, for that, the swivel element (2) presents the appropriate size for its use as lift ramp for that movable support, in one or the other sense.

4. System for harnessing the force of gravity, according to claims 1st and 2nd, **characterized in that** the weight (5) acting alternatively on the two platforms (3) and (4), it is moved by a bridge-crane or similar, that displaces it from one platform to the other, having foreseen the possibility of having two weights, confronted by the respective platforms and exclusively affected by the vertical displacement movement, so that when one of them rests on the corresponding platform, the other one separates from its own.
